# EUROPEAN PATENT SPECIFICATION

(11) **EP 1 886 909 B1**
(45) Date of publication and mention of the grant of the patent: **16.12.2009**
(21) Application number: 06020378.3
(22) Date of filing: 28.09.2006
(51) Int. Cl.: B62K 19/16, B62K 19/06

(54) **Fiber reinforced front frame for a bicycle**
Faserverstärkter Vorderrahmen für ein Fahrrad
Cadre avant, renforcé par des fibres, pour une bicyclette

(30) Priority: 07.08.2006 CN 200620123111 U
(43) Date of publication of application: 13.02.2008
(73) Proprietor: Yuan Min An Enterprise Co., Ltd., Fong Yuan, Taichung (TW)
(72) Inventor: Yu, Kuo-Pin, Fong Yuan Taichung (TW)
(74) Representative: Becker Kurig Straus

(56) References cited:
- EP-A- 0 685 386
- WO-A-98/54046
- DE-U1- 9 316 432

## Description

### BACKGROUND OF THE INVENTION

### 1. Field of the Invention

The present invention relates to a bicycle and more particularly to such a front frame for a bicycle, which has strong structure and light weight.

### 2. Description of the Related Art

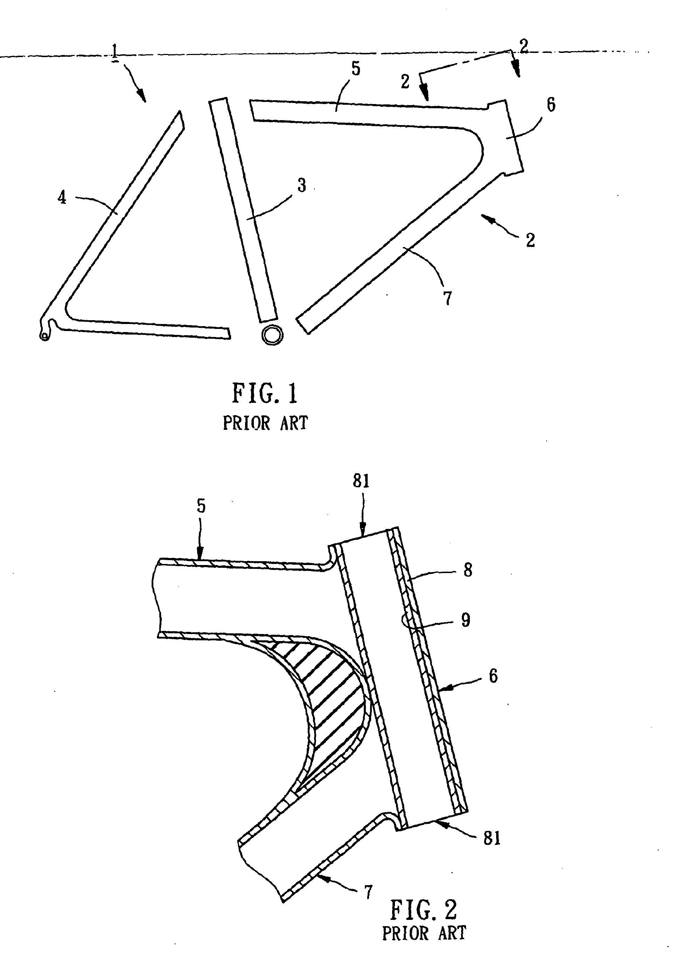

A conventional frame for a bicycle is made of metal and has strong structure and heavy weight. Recently, the bicycle is developed towards reducing its weight and adopts fiber reinforced material. As shown in FIG. 1, the frame 1 is made of carbon fiber reinforced resin and assembled by a front frame **2,** a center shaft 3 and a rear frame **4.** The front frame 2 has an upper tube **5,** a head tube **6** and a lower tube **7.** As shown in FIG. 2**,** the front frame **2** is manufactured by the steps of winding multiple layers of pre-pregs into an elongated tube **8,** forming two openings **81** at two predetermined positions of the elongated tube **8,** inserting a cured tube **9** into the elongated tube **8** through one of the openings **81** such that the two distal ends of the cured tube **9** are flush with the two openings **81** of the elongated tube **8,** and placing the elongated tube **8** and the cured tube **9** into a die, and then curing the elongated tube **8.**

The front frame **2** manufactured by aforesaid method has low structure strength since it is easy to crack at the junction of the cured tube **9** and the head tube **6.** The upper tube **5** and the lower tube **7,** which has no enough structure strength, are easy to brake upon bearing large stress. If the quantity of the pre-pregs used in the front frame **2** is increased for enhancing the structure strength, the weight of the product is unintentionally increased. Therefore, there is always a problem as how to reduce the weight of the front frame 2 and increase the structure strength at the same time.

A fiber reinforced frame is known from the document WO-A-9854046.

### SUMMARY OF THE INVENTION

An objective of the present invention is to provide a front frame for a bicycle, which has high structure strength and light weight.

The foregoing objective of the present invention is attained by each of the front frames claimed in claims 1 and 4. The front frames include an upper tube, a lower tube and a head tube all of which are made of fiber reinforced material. The upper tube has a chamber therein and the lower tube has a chamber therein, too. The head tube extends integrally from a front end of the upper tube and a front end of the lower tube. The upper tube, the head tube and the lower tube are disposed substantially at a same plane. The head tube has a chamber and two openings. The chamber of the head tube communicates with the chamber of the upper tube and the chamber of the lower tube. In a first aspect of the invention, the front frame comprises two first inner tubes provided in the chamber of the upper tube. The abutted portions of the two inner tubes form a rib such that the structure strength of the upper tube is improved. In a second aspect of the invention, the front frame comprises two second inner tubes provided in the chamber of the lower tube. The abutted portions of the two second inner tubes from a rib such that the structure strength of the lower tube is improved.

### BRIEF DESCRIPTION OF THE DRAWINGS

FIG. 1 is an explosive view of the frame of a conventional bicycle.
FIG. 2 is a sectional view along the 2-2 line in FIG. 1.
FIG 3 is a front view of a preferred embodiment of the present invention.
FIG 4 is a sectional view along the 4-4 line in FIG. 3.
FIG. 5 is a sectional view along the 5-5 line in FIG. 3.
FIG 6 is a sectional view along the 6-6 line in FIG. 3.

### DETAILED DESCRIPTION OF THE INVENTION

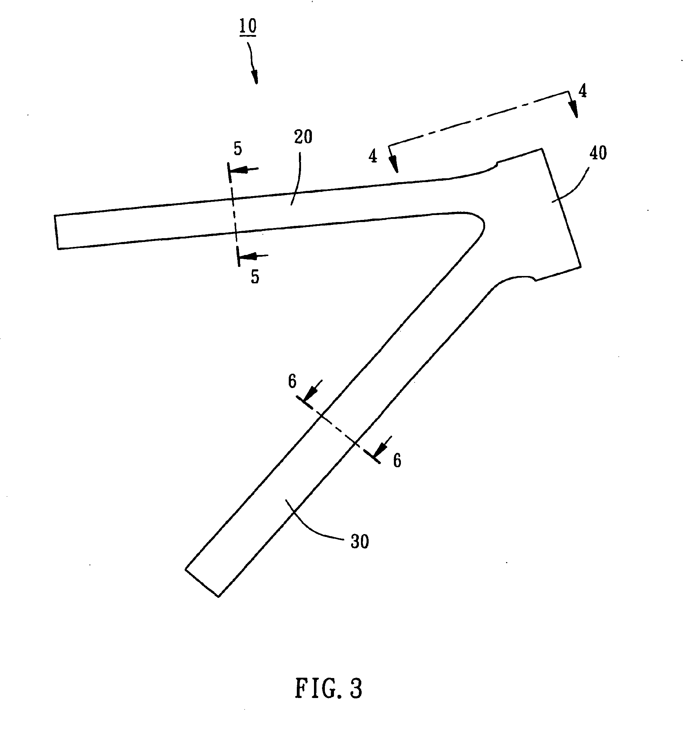

Referring to FIG 3, a front frame **10** for a bicycle in accordance with the preferred embodiment of the present invention is shown comprising an upper tube **20,** two first inner tubes **24,** a lower tube **30,** two second inner tubes **34** and a head tube **40** all of which are made of fiber reinforced resin material. The fiber can adopt but not restrict to carbon fiber, glass fiber, boron fiber or Kevlar^{®} fiber. The resin can adopt thermosetting resin or thermoplastic resin.

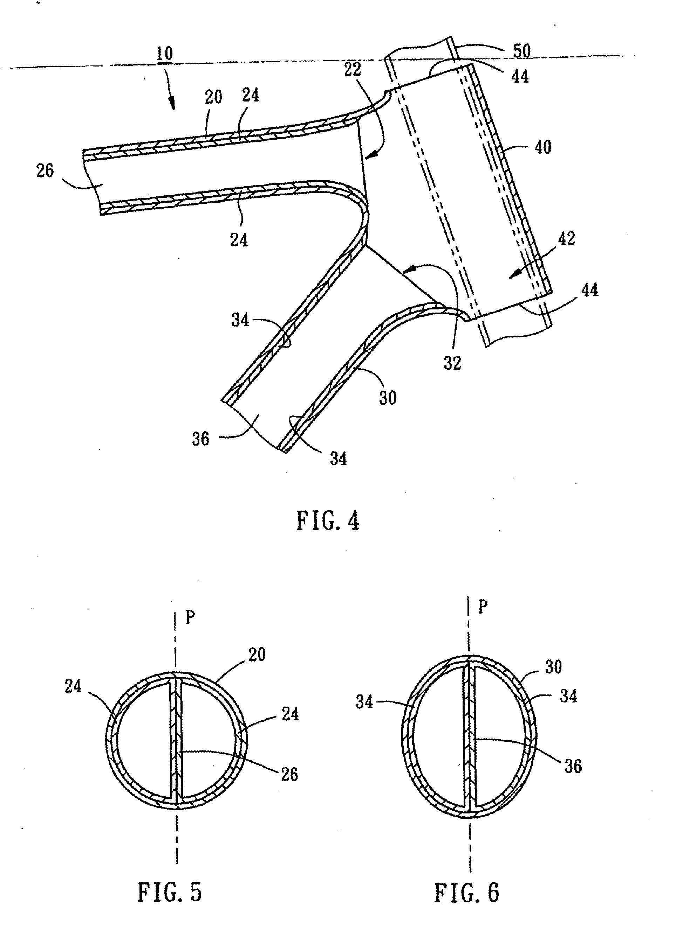

As shown in FIGS. 4-6, the upper tube **20,** the lower tube **30** and the head tube **40** are formed integrally. The upper tube **20** has a chamber **22** therein. The two first inner tubes **24** abut together and are disposed in the chamber **22** of the upper tube **20.** The upper tube **20** and the two first inner tubes **24** are closely contacted without a gap therebetween. The abutted portions of the first inner tubes **24** form an upper rib **26.** The lower tube **30** has a chamber **32** therein, too. The two second inner tubes **34** abut together and are disposed in the chamber **32** of the lower tube **30.** The lower tube **30** and the two second inner tubes **34** are closely contacted without a gap therebetween. The abutted portions of the second inner tubes **34** form a lower rib 36.

The head tube **40** extends integrally from a front end of the upper tube **20** and a front end of the lower tube **30.** The upper tube **20,** the head tube **40** and the lower tube **30** are disposed at a same plane **P**. The upper rib **26** of the upper tube **20** is parallel to the plane **P.** The lower rib **36** of the lower tube **30** is parallel to the plane **P,** too. The head tube **40** has a chamber **42** for receiving an upright tube **50** of a front fork (not shown), and two openings **44** communicating the chamber **42** with outside. The chamber **42** of the head tube **40** communicates with the chamber **22** of the upper tube **20** and the chamber **32** of the lower tube **30.** The first inner tubes **24** each have an inside that communicates with the chamber **42** of the head tube **40,** and the second inner tubes **34** each have an inside that communicates with the chamber **42** of the head tube **40,** too.

The front frame **10** is manufactured by the following steps. First, abut the two first inner tubes **24** together and abut the two second inner tubes **34** together. Then wind multiple layers of pre-pregs around the two first inner tubes **24** to form the upper tube **20,** and wind multiple layers of pre-pregs into the head tube **40** at the front end of the upper tube **20,** and wind multiple layers of pre-pregs around the two second inner tubes **34** to form the lower tube **30.** Finally, place the combination into a die (not shown) and inflate the two first inner tubes **24,** the two second inner tubes **34** and the head tube **40** with high pressure air to make the two first inner tubes **24** (or two second inner tubes **34**) join with the upper tube **20** (or the lower tube **30**) tight on the one hand, and to make the upper tube **20,** the lower tube **30** and the head tube **40** abut on the inner wall of the die on the other hand. Then cure the combination to form the front frame **10.**

Since the front frame **10** is cured only once, there is no crack generated between the first inner tubes **24** (or two second inner tubes **34**) and the upper tube **20** (or the lower tube **30**). The structure strength of the front frame **10** is improved. Besides, since the upper tube **20** has the upper rib **26** inside and the lower tube **30** has the lower rib **36** inside, the structure strength of the upper tube **20** and the lower tube **30** are improved. Under the premise that the structure strength of the front frame **10** is enough, the quantity of the pre-pregs used in the front frame **10** can be reduced such that the weight of the front frame **10** can be decreased. The weight of the front frame **10** of the present invention is further decreased since the front frame **10** does not have the cured tube **9** in the conventional structure. Therefore, the front frame **10** of the present invention can improve the drawback of the conventional structure and achieve the objective of the present invention.

In practice, the structure of the front frame **10** has other alternatives. For example, the extending direction of the upper rib **26** and the lower rib **36** can be changed according to user's demand. The upper rib **26** or the lower rib **36** may also not be present. Although particular embodiments of the invention have been described in detail for purposes of illustration, various modifications and enhancements may be made without departing from the scope of the invention as claimed.

## Claims

1. A front frame for a bicycle, comprising:
an upper tube (20) made of fiber reinforced material and having a chamber (22) therein;
a lower tube (30) made of fiber reinforced material and having a chamber (32) therein; and
a head tube (40) made of fiber reinforced material and extending integrally from an end of the upper tube (20) and an end of the lower tube (30); wherein the upper tube (20), the lower tube (30) and the head tube (40) are disposed substantially at the same plane (P), and the head tube (40) has a chamber (42) and two openings (44) communicating the chamber (42) with outside, and the chamber (42) of the head tube (40) communicates with the chamber (22) of the upper tube (20) and the chamber (32) of the lower tube (30), **characterised by** further comprising two first inner tubes (24) abutted together and disposed in the chamber (22) of the upper tube (20), wherein the upper tube (20) and the two first inner tubes (24) are closely contacted without a gap therebetween, and the abutted portions of the first inner tubes (24) form an upper rib (26).

2. The front frame for a bicycle as claimed in claim 1, wherein an inside of the first inner tubes (24) communicates with the chamber (42) of the head tube (40).

3. The front frame for a bicycle as claimed in claim 1, wherein the upper rib (26) is substantially parallel to the plane (P).

4. A front frame for a bicycle, comprising:
an upper tube (20) made of fiber reinforced material and having a chamber (22) therein;
a lower tube (30) made of fiber reinforced material and having a chamber (32) therein; and
a head tube (40) made of fiber reinforced material and extending integrally from an end of the upper tube (20) and an end of the lower tube (30); wherein the upper tube (20), the lower tube (30) and the head tube (40) are disposed substantially at the same plane (P), and the head tube (40) has a chamber (42) and two openings (44) communicating the chamber (42) with outside, and the chamber (42) of the head tube (40) communicates with the chamber (22) of the upper tube (20) and the chamber (32) of the lower tube (30), **characterised by** further comprising two second inner tubes (34) abutted together and disposed in the chamber (32) of the lower tube (30), wherein the lower tube (30) and the two second inner tubes (34) are closely contacted without a gap therebetween, and the abutted portions of the second inner tubes (34) form an lower rib (36)

5. The front frame for a bicycle as claimed in claim 4, wherein an inside of the second inner tube (34) communicates with the chamber (42) of the head tube (40).

6. The front frame for a bicycle as claimed in claim 4, wherein the lower rib (36) is substantially parallel to the plane (P).

## Patentansprüche

1. Vorderrahmen für ein Fahrrad, umfassend:
ein oberes Rohr (20), das aus einem mit Faser verstärktem Material hergestellt ist und darin eine Kammer (22) aufweist,
ein unteres Rohr (30), das aus einem mit Faser verstärktem Material hergestellt ist und darin eine Kammer (32) aufweist, und
ein Kopfrohr (40), das aus einem mit Faser verstärktem Material hergestellt ist und sich von einem Ende des oberen Rohrs (20) und einem Ende des unteren Rohrs (30) einstückig erstreckt, worin das obere Rohr (20), das untere Rohr (30) und das Kopfrohr (40) im Wesentlichen in der gleichen Ebene (P) angeordnet sind, und worin das Kopfrohr (40) eine Kammer (42) und zwei Öffnungen (44) aufweist, die die Kammer (42) mit der Außenseite verbinden, und worin die Kammer (42) des Kopfrohres (40) mit der Kammer (22) des oberen Rohres (20) und der Kammer (32) des unteren Rohres (30) verbunden ist, **dadurch gekennzeichnet, dass** weiterhin zwei erste Innenrohre (24) umfasst sind, die aneinandergrenzen und in der Kammer (22) des oberen Rohres (20) angeordnet sind, worin das obere Rohr (20) und die zwei ersten Innenrohre (24) lückenlos in Kontakt stehen, und worin die angrenzenden Bereiche der ersten Innenrohre (24) eine obere Rippe (26) bilden.

2. Vorderrahmen für ein Fahrrad nach Anspruch 1, worin eine Innenseite der ersten Innenrohre (24) mit der Kammer (42) des Kopfrohres (40) verbunden ist.

3. Vorderrahmen für ein Fahrrad nach Anspruch 1, worin die obere Rippe (26) im Wesentlichen parallel zu der Ebene (P) liegt.

4. Vorderrahmen für ein Fahrrad, umfassend:
ein oberes Rohr (20), das aus einem mit Faser verstärktem Material hergestellt ist und eine Kammer (22) darin aufweist,
ein unteres Rohr (30), das aus einem mit Faser verstärktem Material hergestellt ist und darin eine Kammer (32) aufweist, und
ein Kopfrohr (40), das aus einem mit Faser verstärktem Material hergestellt ist und sich von einem Ende des oberen Rohrs (20) und einem Ende des unteren Rohrs (30) einstückig erstreckt,
worin das obere Rohr (20), das untere Rohr (30) und das Kopfrohr (40) im Wesentlichen in der gleichen Ebene (P) angeordnet sind, und worin das Kopfrohr (40) eine Kammer (42) und zwei Öffnungen (44) aufweist, die die Kammer (42) mit der Außenseite verbinden, und worin die Kammer (42) des Kopfrohrs (40) mit der Kammer (22) des oberen Rohrs (20) und der Kammer (32) des unteren Rohr (30) verbunden ist, **dadurch gekennzeichnet, dass** weiterhin zwei zweite Innenrohre (34) umfasst sind, die aneinandergrenzen und in der Kammer (32) des unteren Rohrs (30) angeordnet sind, worin das untere Rohr (30) und die zwei zweiten Innenrohre (34) lückenlos in Kontakt stehen und worin die angrenzenden Bereiche der zwei zweiten Innenrohre (34) eine untere Rippe (36) bilden.

5. Vorderrahmen für ein Fahrrad nach Anspruch 4, worin eine Innenseite des zweiten Innenrohrs (34) mit der Kammer (42) des Kopfrohrs (40) verbunden ist.

6. Vorderrahmen für ein Fahrrad nach Anspruch 4, worin die untere Rippe (36) im Wesentlichen parallel zu der Ebene (P) liegt.

## Revendications

1. Un cadre avant pour bicyclette comprenant :
un tube supérieur (20) fait de matériau en fibre renforcé et comportant à l'intérieur une chambre (22) ;
un tube inférieur (30) fait de matériau en fibre renforcé et comportant à l'intérieur une chambre (32); et
un tube de tête (40) fait de matériau en fibre renforcé et s'étendant intégralement d'une extrémité du tube supérieur (20) à une extrémité du tube inférieur (32), dans lequel le tube supérieur (20) et le tube inférieur (30) et le tube de tête (40) sont disposés sensiblement dans le même plan P et le tube de tête (40) comporte une chambre (42) et deux ouvertures (44) faisant communiquer la chambre (42) avec l'extérieur, et la chambre (42) du tube de tête (40) communique avec la chambre (22) du tube (20) et la chambre (32) du tube inférieur (30), **caractérisé en ce qu'**il comprend en outre deux premiers tubes internes (24) aboutés ensemble et disposés dans la chambre (22) du tube supérieur (20), dans lequel le tube (20) et les deux tubes internes (24) sont en contact étroit sans espace entre eux et les portions aboutées des premiers tubes (24) forment une nervure supérieure (26).

2. Le cadre avant pour bicyclette tel que revendiqué dans la revendication 1 dans lequel un espace intérieur du premier tube intérieur (24) communique avec la chambre (42) du tube de tête (40).

3. Le cadre avant pour bicyclette tel que revendiqué dans la revendication 1 dans lequel la nervure supérieure (26) est sensiblement parallèle au plan P.

4. Un cadre avant de bicyclette comprenant :
un tube supérieur (20) fait de matériau en fibre renforcé et comportant à l'intérieur une chambre (22);
un tube inférieur (30) fait de matériau en fibre renforcé et comportant à l'intérieur une chambre (32); et
un tube de tête (40) fait de matériau en fibre renforcé et s'étendant intégralement d'une extrémité du tube supérieur (20) à une extrémité du tube inférieur (30), dans lequel le tube supérieur (20), le tube inférieur (30) et le tube de tête (40) sont disposés sensiblement dans le même plan P et le tube de tête (40) comporte une chambre (42) et deux ouvertures (44) faisant communiquer la chambre (42) avec l'extérieur, et la chambre (42) du tube de tête (40) communique avec la chambre (22) du tube (20) et la chambre (32) du tube inférieur (30), **caractérisé en ce qu'**il comprend en outre deux seconds tubes internes (34) aboutés ensemble et disposés dans la chambre (32) du tube inférieur (30), dans lequel le tube inférieur (30) et les deux second tubes internes (34) sont en contact étroit sans espace entre eux et les portions aboutées des premiers tubes (34) forment une nervure inférieure (36).

5. Le cadre avant pour bicyclette tel que revendiqué dans la revendication 4 dans lequel un espace intérieur du second tube intérieur (34) communique avec la chambre (42) du tube de tête (40).

6. Le cadre avant pour bicyclette tel que revendiqué dans la revendication 4 dans lequel la nervure inférieure (36) est sensiblement parallèle au plan P.
